# EUROPEAN PATENT SPECIFICATION

(11) **EP 2 487 956 B1**
(45) Date of publication and mention of the grant of the patent: **07.08.2019**
(21) Application number: 10788852.1
(22) Date of filing: 02.06.2010
(51) Int. Cl.: H04W 60/00

(54) **NETWORK REPLACEMENT METHOD, CELL AND SYSTEM**
NETZWERKAUSTAUSCHVERFAHREN, ZELLE UND SYSTEM
PROCÉDÉ, CELLULE ET SYSTÈME DE REMPLACEMENT DE RÉSEAU

(30) Priority: 10.10.2009 CN 200910180246
(43) Date of publication of application: 15.08.2012
(73) Proprietor: ZTE Corporation, Shenzhen, Guangdong 518057 (CN)
(72) Inventor: LIU, Fulei, Guangdong 518057 (CN)
(74) Representative: Novagraaf Technologies
(86) International application number: PCT/CN2010/073482
(87) International publication number: WO 2010/145456

(56) References cited:
- CN-A- 1 863 370
- CN-A- 101 188 858
- CN-A- 101 489 216
- US-A1- 2002 111 166
- US-A1- 2002 111 180
- US-A1- 2007 165 573

## Description

### Technical field of this invention

This invention relates to the technical field of communication, and in particular to a network replacement method, apparatus and system.

### Background of this invention

At present, the generally used radio network (this invention refers specifically to wideband code division multiple access (WCDMA) network) replacement method in the industry is single adjacent area hard replacement. The method specifically comprises: dividing the entire network into several areas; removing the old network equipment area by area; installing the new network equipment, and then providing service for the radio network user.

This replacement method has the following disadvantages:
(1) during the time period of removing the old network equipment and installing the new network equipment, no network provides service for the user, that is to say, the mobile equipment (mobile phone, data card and the like) held by the user has no signal, so that the services such as voice call, data download and the like cannot be performed;
(2) since the replacement is performed by removing and installing area by area, a large amount of data has to be produced and updated, and in particular the adjacent area relationship is needed to be produced in time according to the network replacement situation, which increases the workload of each removing and installing phase;
(3) removing and installing area by area will result in a large amount of same-frequency or different-frequency inter-operation among equipment of different manufacturers, and thus it is difficult to ensure the key performance indicator (KPI) of the network, and the user experience is poor;
(4) because generally network replacement requires to be done in short time, it is easy to make mistakes if there is a large amount of data to produce and many operation steps at each phase; and after the mistakes are made, the network is hard to roll back, since the new equipment which has just been installed has to be removed, the old equipment has to be re-installed and the original data has to be imported in the several hours of the rolling back process; and
(5) the number of the migration users cannot be precisely controlled.

Therefore, huge risks are brought to both the operators and the vendors by the conventional network replacement method.
Patent document US 2002/111166 discloses a method and a system for selecting a preferred cell in a wireless communication system is provided that includes broadcasting cell reselection parameters from the preferred cell; patent document US 2002/111180 discloses that coordinated subscriber access handling for shared network support.

### Summary of this invention

To solve the above problems in the related art, this invention provides a network replacement method, a cell and a network replacement system, as defined in the appended claims.

Specifically, this disclosure provides a network replacement method, comprising: setting a second cell, that is for replacing a first cell, to reject that users update through a location area; adjusting a quality offset parameter value of the first cell to be less than a quality offset parameter value of the second cell; and setting the second cell to permit the users to update through the location area.

Furthermore, the users are divided into a plurality of user groups; and one user group is set at regular intervals to be permitted to update through the location area.

Furthermore, the first cell and the second cell belong to the same public land mobile network, and adopt different location area codes.

Furthermore, before adjusting the quality offset parameter value of the first cell to be less than the quality offset parameter value of the second cell, the method further comprises: configuring the second cell, which belongs to a base station that has the same geographic location as the first cell, to be a different-frequency adjacent cell of the first cell.

Furthermore, the reason that the second cell rejects that the users update through the location area is set as no appropriate cell being in the location area.

This invention further provides a cell, comprising: a first setting module, adapted for setting a second cell for replacing a first cell to reject that users update through a location area; an adjusting module, adapted for adjusting a quality offset parameter value of the first cell to be less than a quality offset parameter value of the second cell; and a second setting module, adapted for setting the second cell to permit the users to update through the location area.

Furthermore, the cell further comprises a grouping module, adapted for dividing the users into a plurality of user groups; and wherein the second setting module is further adapted for setting at regular intervals to permit one user group to update through the location area.

Furthermore, the cell further comprises a configuration module, adapted for configuring the second cell, which belongs to a base station that has the same geographic location as the first cell, to be a different-frequency adjacent cell of the first cell.

This invention further provides a network replacement system, comprising a plurality of cells, wherein each cell of the plurality of cells comprises: a first setting module, adapted for setting a second cell for replacing a first cell to reject that users update through a location area; an adjusting module, adapted for adjusting a quality offset parameter value of the first cell to be less than a quality offset parameter value of the second cell; and a second setting module, adapted for setting the second cell to permit the users to update through the location area.

Furthermore, the each cell further comprises a grouping module, adapted for dividing the users into a plurality of user groups; and wherein the second setting module is further adapted for setting at regular intervals to permit one user group to update through the location area.

Compared with the related art, this invention has the following advantages:
by the method provided by this invention, the problem in the related art that the service cannot be provided for the user for a period of time during the replacement of the new and old networks can be solved; and meanwhile, the number of users of each migration can be precisely controlled in the new network by the method, so that the impact caused by the simultaneous migration of a large number of users on the new network can be prevented; furthermore, by the method provided by this invention, no change is needed to be made on the core network side of the old network; the operator can have only one public land mobile network (PLMN), and no other PLMN numbers are required to be provided; and in the entire network replacement process, little operations are performed at each phase, so that the probability of error is small, and a large amount of time and manpower are saved.

### Brief description of the drawings

To clarify the embodiment of this invention or the technical solution in the related art, the drawings to be used in the description of the embodiment or the related art are introduced below briefly. Obviously, the drawings in the following description are only some embodiments of this invention, and those skilled in the art can obtain other drawings according to these drawings without involving any creative work.
Fig. 1 shows a flowchart of a network replacement method provided by this invention;
Fig. 2 shows a flowchart of updating a location area by the user in the network replacement process provided by the embodiment of this invention;
Fig. 3 shows a structural diagram of a network replacement apparatus provided by this invention; and
Fig. 4 shows a structural block diagram of a cell provided by this invention.

### Detailed description of the embodiments

The technical solution in the embodiments of this invention is described below clearly and completely with reference to the drawings in the embodiments of this invention. Obviously, the described embodiments are only a part of the embodiments of this invention rather than all the embodiments. Based on the embodiments in this invention, all other embodiments obtained by those skilled in the art without involving any creative work belong to the scope of protection of this invention.

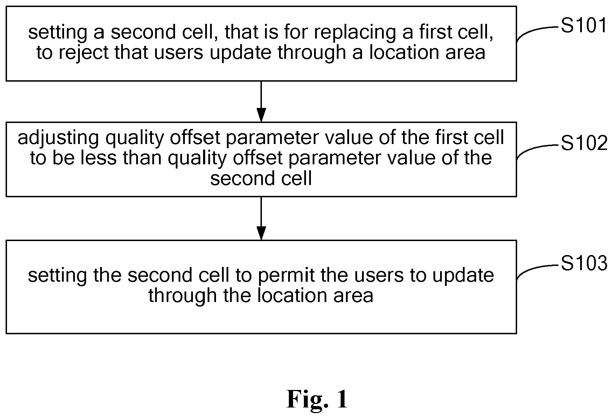

To solve the problems in the related art, this invention provides a network replacement method, an apparatus and a system. The method is shown in Fig. 1, comprising the following steps.

Step S101, setting a second cell, that is for replacing a first cell, to reject that users update through a location area.

Step S102, adjusting a quality offset parameter value of the first cell to be less than a quality offset parameter value of the second cell.

Step S103, setting the second cell to permit the users to update through the location area.

In the related technology, a hard replacement method in which the old network equipment is removed and the new network equipment is then installed is generally adopted for network replacement, so that the network service cannot be provided for the user for a period of time. In the embodiments of this invention, the users are updated from the first cell to the second cell, and then the network equipment is removed, so that the interruption of user network service in the network replacement process can be avoided. Meanwhile, the adjusted lower quality offset parameter value can promote the users to go to the second cell from the first cell via the cell reselection. In this invention, the users can be ensured to be migrated into the second cell integrally and orderly through the change between the rejection of the user location area update and the permission of the user location area update.

By the method provided by this invention, the problem in the related art that the service cannot be provided for the user for a period of time at the replacement alternation of the new and old networks can be solved; and meanwhile, by the method, the number of users of each migration can be precisely controlled in the new network, and the impact caused by the simultaneous migration of a large number of users on the new network can be prevented.

Preferably, the users are divided into a plurality of user groups; it is configured at regular intervals that one user group is permitted to update through the location area.

The number of users of each update in the second cell can be precisely controlled through grouping the users and permitting the update of the users group by group, so that the impact caused by the simultaneous migration of a large number of users on the second cell can be prevented.

Preferably, the first cell and the second cell belong to the same public land mobile network, and adopt different location area codes.

Preferably, before adjusting the quality offset parameter value of the first cell to be less than the quality offset parameter value of the second cell, the method further comprises: configuring the second cell, which belongs to a base station that has the same geographic location as the first cell, to be a different-frequency adjacent cell of the first cell.

Preferably, the reason that the second cell rejects that the user updates through the location area is set as no appropriate cell being in the location area.

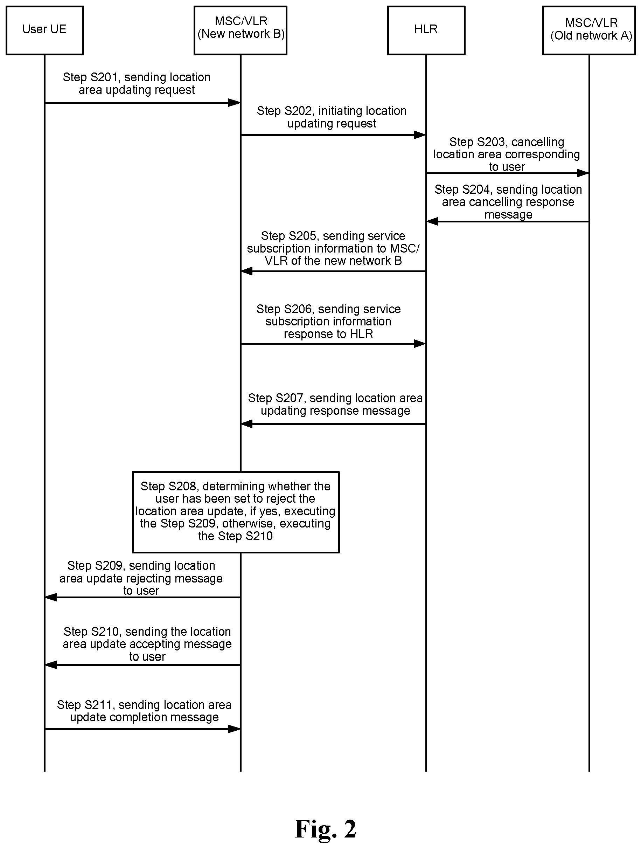

A preferred embodiment of this invention is given below according to Fig. 2, and the technical details of this invention are further given with reference to the description of the embodiment, so that the specific implementation process of the method provided by this invention can be better described.

The embodiment of this invention provides a network replacement method based on a CS domain rejection. The core idea is that: before network replacement, all the users are set to reject location area update in the mobile switch center (referred to as MSC) of the new network, with the international mobile subscriber identity (referred to as IMSI) of the user as identifier; after the network replacement is started, the rejection setting of the user group (the user group is divided in advance) of each migration is canceled in the MSC of the new network, till the rejection settings of all the users are cancelled. Thereby, the users of the old network can be migrated into the new network in groups, and the access control on the user is realized. By the method, the operator can effectively control the number of users of each migration without causing great impact on the new network.

Specifically, the system network elements involved in the embodiment comprise: radio network controller (referred to as RNC) and NodeB (WCDMA system base station) on the ratio side, and home location register (referred to as HLR) and MSC on the core network side.

Specifically, the network replacement method provided by the embodiment comprises the following processes.

### I. Before network replacement, performing the following operation.

(1) Before the network replacement, creating a new network B, and performing optimized processing on the entire network.
In this case, the new network B and the old network A use the same public land mobile network (referred to as PLMN), namely the home PLMN (referred to as HPLMN) of the user.
The location area codes (referred to as LACs) of the new network B and the old network A must be different; and the new network B and the old network A can use either the different MSCs or the same MSC.
(2) Setting the rejection of the reason #15 for all the users of the operator in the location area updating process in the MSC of the core network CS domain of the new network B, so that all the users cannot access the new network B, wherein #15 represents "there is no appropriate cell in the location area' in the 3GPP TS 24.008 protocol.
(3) According to the preset constraint condition, dividing all the users in the present network into N groups with the IMSI of the user as the user identifier, wherein the division of the user group can be determined according to the specific number of users of the operator, and N is a positive integer.
Table 1 shows a specific example, in which the user number segments of the entire network are divided into 3 segments.

**Table 1 schematic diagram of segmentation of the user number segments of the entire network**

| IMSI number | New network B: MSC rejection list |
|---|---|
| 139*****000 | Reject |
| ... | |
| 139*****099 | |
| 139*****100 | Reject |
| ... | |
| 139*****199 | |
| 139*****200 | Reject |
| ... | |
| 139*****299 | |

(4) On the RNC and Node B side, it is required to configure the cell of the new network B, which belongs to a base station that has the same geographic location, to be the different-frequency adjacent cell of the cell of the old network A, and modify a cell reselection parameter facilitating the user being reselected to the new network B cell. Specifically, the value of the quality offset parameter Qoffset of the old network A cell is reduced, for example, reducing the value of the parameter to -40dB.

### II. In the network replacement process

(1) Performing rejection cancelling operation on a certain user group needed to be migrated in the core network side MSC of the new network B, and performing no processing on other user groups.

It is described below by taking the grouping manner in Table 1 as an example. If the number segment of the user group needed to be migrated in the new network B ranges from 139*****000 to 139*****099, the rejection reason #15 of this group is cancelled in the MSC of the new network B. Here the users within these number segments are accepted in the location area updating process, so that they can be migrated into the new network B. While other users, namely the users whose number segment of the user group ranges from 139*****100 to 139*****299 are still with the rejection #15. The users in these number segments are rejected in the location area updating process of Fig. 2, which is shown in Table 2:

**Table 2 schematic diagram of number segments of migration user groups**

| IMSI number | New network B: MSC rejection list |
|---|---|
| 139*****000 | Accept |
| ... | |
| 139*****099 | |
| 139*****100 | Reject |
| ... | |
| 139*****199 | |
| 139*****200 | Reject |
| ... | |
| 139*****299 | |

The process of initiating a location updating request to the new network by the user is introduced below briefly, which specifically comprises, as shown in Fig. 2, the following steps.

Step S201, user equipment (UE) sends a location area updating request to the MSC/visitor location register (VLR) of the new network B.

Step S202, after receiving the location area updating request, the MSC/VLR of the new network B initiates the location updating request to the HLR.

Step S203, after receiving the location area updating request, the HLR cancels the location area in the MSC/VLR of the old network A corresponding to the user.

Step S204, the MSC/VLR of the old network A sends location area cancelling response message to the HLR.

Step S205, the HLR sends the service subscription information to the MSC/VLR of the new network B.

Step S206, the MSC/VLR of the new network B sends the service subscription information response to the HLR.

Step S207, the HLR sends the location area updating response message to the MSC/VLR of the new network B.

Step S208, after receiving the location area updating response message, the MSC/VLR of the new network B determines whether the user has been set to be rejected from the location area update, and if yes, execute Step S209, otherwise, execute Step S210.

Step S209, it is determined the user is non-migration user, the location area update rejecting message is sent to the user, and the location area updating operation of the user is failed.

Step S210, it is determined the user is migration user, and the location area update accepting message is sent to the user.

Step S211, after receiving the location area update accepting message sent by the MSC/VLR of the new network B, the user UE sends location area update completion message to the MSC/VLR of the new network B.

Of course, a rejection principle diagram of the new and old networks using different MSCs is given in Fig. 2. Since the new network B and the old network A can use the same MSC, one MSC can also be used in the practical application.

It can be known from the updating process that only the user whose rejection setting is cancelled can be migrated into the new network B, so that the number of users migrated to the new network B can be effectively controlled through such control means.
(2) Repeating Step (1) till all the users in the divided user groups have been migrated to the new network B. For instance, the rejection reason of 139*****100 to 139*****199 in Table 1 can be cancelled for the second round, and then cancel the rejection reason of 139*****200 to 139*****299 for the third round. In this way, all the users are migrated into the new network B after the three rounds.

It has to be noted that only the migration users can either reside in the new network B, or return to the old network A in the process of each migration, and other non-migration users can only reside in the old network A.

In the process of each migration, the migration users not rejected by the new network B can quickly enter the new network B, while other users are still in the old network A.

It is worthy noting that if the number of the roaming users of the operator is relatively small, it is possible that no rejection reason is set so that the users can access the old network A or the new network B freely. If the number of the roaming users is relatively large, the roaming users are taken as a group of migration users which is set on the first group or the last group of user migration of the entire network.

### III. After the users are migrated into the new network B, the equipment of the old network A is powered off, made out of service and removed.

To sum up, by the method provided by the embodiment, the network users can be smoothly migrated from the old network to the new network, and the number of users and user types of each migration can be precisely controlled on the new network side, so that the problem in the related art that the service cannot be provided for the user for a period of time at the replacement alternation of the new and old networks can be solved; and the impact caused by the simultaneous migration of a large number of users on the new network can be prevented. Furthermore, by the method provided by this invention, no change is needed to be made on the core network side of the old network; the operator can have only one PLMN, and no other PLMN numbers are required to be provided. In the entire network replacement process, relatively little operation is performed at each phase, so the probability of error is small, and a large amount of time and manpower are saved.

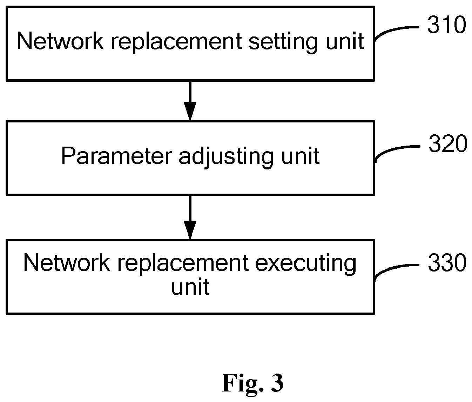

This invention further provides a network replacement apparatus shown in Fig. 3, comprising:
a network replacement setting unit 310, adapted for setting all the users to reject location area update, and grouping all the users according to the preset constraint condition in the established new network;
a parameter adjusting unit 320, adapted for lowering the quality offset parameter value of the old network cell; and
a network replacement executing unit 330, adapted for cancelling the location area update rejection setting of a certain user group in the new network, permitting the users in the user group to be migrated into the new network through location area update, and repeating the process after the preset time till the location area update rejection settings of all the user groups are cancelled.

In this case, the rejection reason for location area update rejection in the network replacement setting unit 310 is that there is no appropriate cell in the location area.

Before lowering the quality offset parameter value of the old network cell, the parameter adjusting unit 320 is further adapted for configuring the new network cell, which belongs to a base station that has the same geographic location as the old network cell, to be a different-frequency adjacent cell of the old network cell.

Furthermore, the new network and the old network belong to the same public land mobile network, and adopt different location area codes.

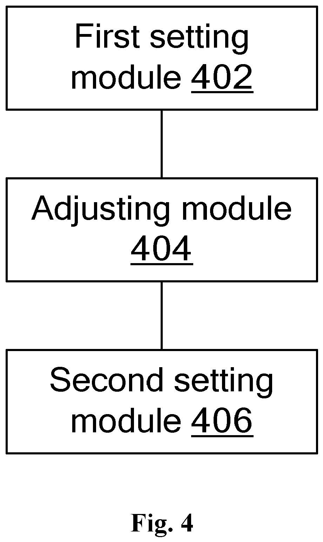

This invention further provides a cell. Fig. 4 shows a structural block diagram of the cell provided by this invention, comprising a first setting module 402, an adjusting module 404 and a second setting module 406.

The first setting module 402 is adapted for setting a second cell, that is for replacing a first cell, to reject that users update through a location area; the adjusting module 404 is connected to the first setting module 402 and is adapted for adjusting a quality offset parameter value of the first cell to be less than a quality offset parameter value of the second cell set by the first setting module 402; and the second setting module 406 is connected to the adjusting module 404 and is adapted for permitting the user to update through the location area after the adjusting module 404 finishes adjusting the quality offset parameter value of the first cell.

Preferably, the system further comprises: a grouping module 408, adapted for dividing the users into a plurality of user groups; the second setting module 406 is further adapted for setting at regular intervals to permit one user group to update through the location area.

Preferably, the system further comprises: a configuration module 410, adapted for configuring the second cell, which belongs to a base station that has the same geographic location as the first cell, to be a different-frequency adjacent cell of the first cell.

This invention further provides a network replacement system, comprising a plurality of cells, wherein each cell comprises the first setting module 402, the adjusting module 404, the second setting module 406 and the grouping module 408.

Obviously, those skilled in the art can make various modifications and transformations on this invention without deviating from the scope of the claims. These modifications and transformations are intended to be included in this invention.

## Claims

1. A network replacement method, **characterized by** comprising:
setting (S101) a second cell, which is for replacing a first cell, to reject each of all user equipments, UEs, to update a location area;
adjusting (S102) a quality offset parameter value of the first cell to be less than a quality offset parameter value of the second cell;
dividing all the UEs into a plurality of user groups;
setting the second cell to permit the UEs of a first user group to update the location area by cancelling the location area update rejection setting of the first user group; and
setting, at regular intervals, the second cell to permit the UEs of a further user group to update the location area by cancelling the location area update rejection setting of the further user group, until the location area update rejection settings of all the user groups are cancelled.

2. The method according to claim 1, wherein the first cell and the second cell belong to a same public land mobile network, and adopt different location area codes.

3. The method according to claim 1, wherein before adjusting (S102) the quality offset parameter value of the first cell to be less than the quality offset parameter value of the second cell, the method further comprises:
configuring a second cell, which belongs to a base station that has the same geographic location as the first cell, to be a different-frequency adjacent cell of the first cell.

4. The method according to claim 1, wherein a reason for the second cell rejecting each of all UEs to update the location area is that no appropriate cell is available in the location area.

5. A cell, **characterized by** comprising:
a first setting module (402), adapted for setting a second cell, which is for replacing a first cell, to reject each of all user equipments, UEs, to update a location area;
an adjusting module (404), adapted for adjusting a quality offset parameter value of the first cell to be less than a quality offset parameter value of the second cell;
a grouping module (408), adapted for dividing the users into a plurality of user groups;
a network replacement executing unit (330), adapted for setting the second cell to permit the UEs of a first user group to update the location area by cancelling the location area update rejection setting of the first user group, and for setting, at regular intervals, the second cell to permit the UEs of a further user group to update the location area by cancelling the location area update rejection setting of the further user group, until the location area update rejection settings of all the user groups are cancelled.

6. The cell according to claim 5, further comprising:
a configuration module (410), adapted for configuring a second cell, which belongs to a base station that has a same geographic location as the first cell, to be a different-frequency adjacent cell of the first cell.

7. A network replacement system, comprising a plurality of cells, wherein each cell of the plurality of cells comprises:
a first setting module (402), adapted for setting a second cell, which is for replacing a first cell, to reject each of all user equipments, UEs, to update a location area;
an adjusting module (404), adapted for adjusting a quality offset parameter value of the first cell to be less than a quality offset parameter value of the second cell;
a grouping module (408), adapted for dividing the users into a plurality of user groups;
wherein the network replacement system is configured to execute following steps:
setting the second cell to permit the UEs of a first user group to update the location area by cancelling the location area update rejection setting of the first user group;
at regular intervals, setting the second cell to permit the UEs of a further user group to update the location area by cancelling the location area update rejection setting of the further user group, until the location area update rejection settings of all the user groups are cancelled.

## Patentansprüche

1. Netzwerkersatzverfahren, **dadurch gekennzeichnet, dass** es Folgendes umfasst:
Einstellen (S101) einer zweiten Zelle, die eine erste Zelle ersetzen soll, um jede einzelne von allen Benutzerausrüstungen, UE, abzulehnen, um einen Standort zu aktualisieren;
Anpassen (S102) eines Qualitätsoffsetparameterwerts der ersten Zelle, damit er kleiner als ein Qualitätsoffsetparameterwert der zweiten Zelle ist;
Aufteilen aller UE in eine Vielzahl von Benutzergruppen;
Einstellen der zweiten Zelle, damit die UE einer ersten Benutzergruppe den Standort aktualisieren können, indem die Einstellung zur Ablehnung der Aktualisierung des Standorts der ersten Benutzergruppe abgebrochen wird; und
Setzen der zweiten Zelle in regelmäßigen Abständen, damit die UE einer weiteren Benutzergruppe den Standort aktualisieren kann, indem die Einstellung zur Ablehnung der Aktualisierung des Standorts der weiteren Benutzergruppe abgebrochen wird, bis die Ablehnungseinstellungen für die Aktualisierung des Standorts aller Benutzergruppen abgebrochen werden.

2. Verfahren nach Anspruch 1, wobei die erste Zelle und die zweite Zelle zu einem gleichen öffentlichen Landfunknetz gehören und unterschiedliche Standortsvorwahlen annehmen.

3. Verfahren nach Anspruch 1, wobei vor dem Einstellen (S102) der Qualitätsoffsetparameterwert der ersten Zelle kleiner als der Qualitätsoffsetparameterwert der zweiten Zelle ist, wobei das Verfahren ferner Folgendes umfasst:
Konfigurieren einer zweiten Zelle, die zu einer Basisstation mit dem gleichen geografischen Standort wie die erste Zelle gehört, als eine Nachbarzelle mit unterschiedlicher Frequenz der ersten Zelle.

4. Verfahren nach Anspruch 1, wobei ein Grund, warum die zweite Zelle jede einzelne aller UE ablehnt, um den Standort zu aktualisieren, darin besteht, dass am Standort keine geeignete Zelle verfügbar ist.

5. Zelle, **dadurch gekennzeichnet, dass** sie Folgendes umfasst:
ein erstes Einstellmodul (402), das zum Einstellen einer zweiten Zelle geeignet ist, die eine erste Zelle ersetzen soll, um jede einzelne von allen Benutzerausrüstungen, UE, abzulehnen, um einen Standort zu aktualisieren;
ein Anpassungsmodul (404), das zum Anpassen eines Qualitätsoffsetparameterwerts der ersten Zelle geeignet ist, damit er kleiner als ein Qualitätsoffsetparameterwert der zweiten Zelle ist;
ein Gruppierungsmodul (408), das zum Aufteilen alle Benutzer in eine Vielzahl von Benutzergruppen geeignet ist;
eine Netzwerkersatzausführungseinheit (330), die zum Einstellen der zweiten Zelle geeignet ist, damit die UE einer ersten Benutzergruppe den Standort aktualisieren können, indem die Einstellung zur Ablehnung der Aktualisierung des Standorts der ersten Benutzergruppe abgebrochen wird, und zum Einstellen der zweiten Zelle in regelmäßigen Abständen, damit die UE einer weiteren Benutzergruppe den Standort aktualisieren kann, indem die Einstellung zur Ablehnung der Aktualisierung des Standorts der weiteren Benutzergruppe abgebrochen wird, bis die Ablehnungseinstellungen für die Aktualisierung des Standorts aller Benutzergruppen abgebrochen werden.

6. Die Zelle nach Anspruch 5, ferner umfassend:
ein Konfigurationsmodul (410), das zum Konfigurieren einer zweiten Zelle geeignet ist, die zu einer Basisstation mit dem gleichen geografischen Standort wie die erste Zelle gehört, als eine Nachbarzelle mit unterschiedlicher Frequenz der ersten Zelle.

7. Netzwerkersatzsystem, das eine Vielzahl von Zellen umfasst, wobei jede Zelle der Vielzahl von Zellen Folgendes umfasst:
ein erstes Einstellmodul (402), das zum Einstellen einer zweiten Zelle geeignet ist, die eine erste Zelle ersetzen soll, um jede einzelne von allen Benutzerausrüstungen, UE, abzulehnen, um einen Standort zu aktualisieren;
ein Anpassungsmodul (404), das zum Anpassen eines Qualitätsoffsetparameterwerts der ersten Zelle geeignet ist, damit er kleiner als ein Qualitätsoffsetparameterwert der zweiten Zelle ist;
ein Gruppierungsmodul (408), das zum Aufteilen alle Benutzer in eine Vielzahl von Benutzergruppen geeignet ist;
wobei das Netzwerkersatzsystem so konfiguriert ist, dass es die folgenden Schritte ausführt:
Einstellen der zweiten Zelle, damit die UE einer ersten Benutzergruppe den Standort aktualisieren können, indem die Einstellung zur Ablehnung der Aktualisierung des Standorts der ersten Benutzergruppe abgebrochen wird;
in regelmäßigen Abständen, Setzen der zweiten Zelle, damit die UE einer weiteren Benutzergruppe den Standort aktualisieren kann, indem die Einstellung zur Ablehnung der Aktualisierung des Standorts der weiteren Benutzergruppe abgebrochen wird, bis die Ablehnungseinstellungen für die Aktualisierung des Standorts aller Benutzergruppen abgebrochen werden.

## Revendications

1. Procédé de remplacement de réseau, **caractérisé en ce qu'**il comprend :
le paramétrage (S101) d'une seconde cellule, qui est destinée à remplacer une première cellule, afin de rejeter chacun de tous les équipements utilisateur, UE, afin de mettre à jour un emplacement géographique ;
l'ajustement (S102) d'une valeur de paramètre d'écart de qualité de la première cellule comme étant inférieure à une valeur de paramètre d'écart de qualité de la seconde cellule ;
la division de tous les UE en une pluralité de groupes d'utilisateurs ;
le paramétrage de la seconde cellule afin de permettre aux UE d'un premier groupe d'utilisateurs de mettre à jour l'emplacement géographique en annulant le paramètre de rejet de mise à jour de zone géographique du premier groupe d'utilisateurs ; et
le paramétrage, à des intervalles réguliers, de la seconde cellule afin de permettre aux UE d'un autre groupe d'utilisateurs de mettre à jour l'emplacement géographique en annulant le paramètre de rejet de mise à jour d'emplacement géographique de l'autre groupe d'utilisateurs, jusqu'à ce que les paramètres de rejet de mise à jour d'emplacement géographique de tous les groupes d'utilisateurs soient annulés.

2. Procédé selon la revendication 1, dans lequel la première cellule et la seconde cellule appartiennent à un même réseau mobile terrestre public, et adoptent différents codes d'emplacements géographiques.

3. Procédé selon la revendication 1, dans lequel, avant l'ajustement (S102) de la valeur de paramètre d'écart de qualité de la première cellule comme étant inférieure à la valeur de paramètre d'écart de qualité de la seconde cellule, le procédé comprend en outre :
la configuration d'une seconde cellule, qui appartient à une station de base qui possède le même emplacement géographique que la première cellule, comme étant une cellule adjacente à fréquence différente de la première cellule.

4. Procédé selon la revendication 1, dans lequel une raison pour laquelle la seconde cellule rejette chacun de tous les UE pour mettre à jour l'emplacement géographique est qu'aucune cellule appropriée n'est disponible au niveau de l'emplacement géographique.

5. Cellule, **caractérisée en ce qu'**elle comprend :
un premier module de paramétrage (402), adapté pour paramétrer une seconde cellule, qui est destinée à remplacer une première cellule, afin de rejeter chacun de tous les équipements utilisateur, UE, afin de mettre à jour un emplacement géographique ;
un module d'ajustement (404), adapté pour ajuster une valeur de paramètre d'écart de qualité de la première cellule comme étant inférieure à une valeur de paramètre d'écart de qualité de la seconde cellule ;
un module de groupage (408), adapté pour diviser tous les utilisateurs en une pluralité de groupes d'utilisateurs ;
une unité d'exécution de remplacement de réseau (330), adaptée pour paramétrer la seconde cellule afin de permettre aux UE d'un premier groupe d'utilisateurs de mettre à jour l'emplacement géographique en annulant le paramètre de rejet de mise à jour de zone géographique du premier groupe d'utilisateurs, et pour paramétrer, à des intervalles réguliers, la seconde cellule afin de permettre aux UE d'un autre groupe d'utilisateurs de mettre à jour l'emplacement géographique en annulant le paramètre de rejet de mise à jour d'emplacement géographique de l'autre groupe d'utilisateurs, jusqu'à ce que les paramètres de rejet de mise à jour d'emplacement géographique de tous les groupes d'utilisateurs soient annulés.

6. Cellule selon la revendication 5, comprenant en outre :
un module de configuration (410), adapté pour configurer une seconde cellule, qui appartient à une station de base qui possède le même emplacement géographique que la première cellule, comme étant une cellule adjacente à fréquence différente de la première cellule.

7. Système de remplacement de réseau, comprenant une pluralité de cellules, dans lequel chaque cellule de la pluralité de cellules comprend :
un premier module de paramétrage (402), adapté pour paramétrer une seconde cellule, qui est destinée à remplacer une première cellule, afin de rejeter chacun de tous les équipements utilisateur, UE, afin de mettre à jour un emplacement géographique ;
un module d'ajustement (404), adapté pour ajuster une valeur de paramètre d'écart de qualité de la première cellule comme étant inférieure à une valeur de paramètre d'écart de qualité de la seconde cellule ;
un module de groupage (408), adapté pour diviser tous les utilisateurs en une pluralité de groupes d'utilisateurs ;
dans lequel le système de remplacement de réseau est configuré pour exécuter les étapes suivantes :
le paramétrage de la seconde cellule afin de permettre aux UE d'un premier groupe d'utilisateurs de mettre à jour l'emplacement géographique en annulant le paramètre de rejet de mise à jour de zone géographique du premier groupe d'utilisateurs ;
à des intervalles réguliers, le paramétrage de la seconde cellule afin de permettre aux UE d'un autre groupe d'utilisateurs de mettre à jour l'emplacement géographique en annulant le paramètre de rejet de mise à jour d'emplacement géographique de l'autre groupe d'utilisateurs, jusqu'à ce que les paramètres de rejet de mise à jour d'emplacement géographique de tous les groupes d'utilisateurs soient annulés.
